# EUROPÄISCHE PATENTSCHRIFT

(11) **EP 2 762 734 B1**
(45) Veröffentlichungstag und Bekanntmachung des Hinweises auf die Patenterteilung: **25.05.2016**
(21) Anmeldenummer: 14153675.5
(22) Anmeldetag: 03.02.2014
(51) Int. Cl.: F16B 37/06, B23P 19/06

(54) **Einpressbolzen**
Press-in bolt
Goujon à sertir

(30) Priorität: 01.02.2013 DE 102013101068
(43) Veröffentlichungstag der Anmeldung: 06.08.2014
(73) Patentinhaber: EJOT TEZMAK Baglanti Elemanlari Teknolojileri San. ve Tic. A.S., 34250 Kücükköy - Istanbul (TR)
(72) Erfinder: Homrighausen, Georg, 57319 Bad Berleburg - Girkhausen (DE); Güngör, Hüseyin, 34538 Bahcelehir (TR)
(74) Vertreter: Puschmann Borchert Bardehle Patentanwälte Partnerschaft mbB

(56) Entgegenhaltungen:
- DE-U1- 20 012 431
- US-A- 3 967 669
- US-A1- 2007 258 788

## Beschreibung

Die Erfindung betrifft einen Einpressbolzen zum Einpressen in ein vorgelochtes Blechteil, gemäß dem Oberbegriff des Patentanspruchs 1.

Die EP 0 678 679 B1 offenbart einen Einpressbolzen, der segmentartige konkave Vertiefungen in seiner einem Blechteil zugewandten Ringfläche aufweist. Diese Ausführung hat jedoch den Nachteil, dass zwar eine Verdrehsicherheit durch die zwischen den Vertiefungen liegenden Rippen geschaffen wird, sich jedoch der Rand des Kopfteils in das Blechteil eindrückt. Um diese Verdrehsicherheit zu verbessern, sind zusätzliche sich erhaben entlang des Schaftteils erstreckende Einpressstrukturen vorgesehen.

Zudem offenbart die DE 42 03 153 A1 einen Einpressbolzen, welcher einen Schaft aufweist, der mit einem konischen Bereich am kopfseitigen Schaftende versehen ist, wobei der Konus vom Kopf des Einpressbolzens weg divergierend verläuft. Zudem weist der Kopf eine Ringfläche auf, an welcher Einpressstrukturen angeordnet sind, die sich von dem Schaft nach außen erstrecken. Bei der Einpressung des Bolzens wird Material verdrängt, welches in den konischen Bereich des Schaftes einfließt, wodurch dieser als Hinterschnitt wirkt und die Auszugsfestigkeit gewährleistet.
Die DE 10 2011 104 529 A1 weist eine umlaufende Einpressrippe auf, welche einen dreieckigen Querschnitt besitzt. Zur Verdrehsicherung sind radial nach außen verlaufende Sperrrippen vorgesehen.

Die WO 2011/033760 offenbart eine Einpressmutter mit einer an dem dem Bauteil zugewandten Kopfende vorliegenden Einpressstrukturen, wobei die dem Bauteil zugewandte Fläche konisch verläuft.

Die US 8 092 131 B2 offenbart eine Einpressmutter mit auf einer Ringfläche erhabenen Einpressstrukturen, wobei die Einpressstrukturen einen dreieckigen Querschnitt aufweisen, der direkt am Rand der Ringfläche in einem 90° Winkel abfällt.

Die EP 0 667 936 B1 offenbart ein Einpressteil, das eine in den Bolzen eingebrachte Nut aufweist, wodurch ein Hinterschnitt erzeugt wird, in den Material zur Fixierung des Bolzens einfließen soll. Die dem Bauteil zugewandte Kopffläche weist Einpressstrukturen in Form von Wülsten auf. Diese steigen von der Kopfunterseite kreisförmig an und fallen symmetrisch kreisförmig wieder ab. Die Wülste drücken sich in das Blechteil ein, wodurch die Verdrehsicherheit des eingebrachten Bolzens gewährleistet wird.

Es ist Aufgabe der Erfindung einen Einpressbolzen derart zu verbessern, dass seine Auszugsfestigkeit und Dauerbelastbarkeit in Blechverbindungen erhöht wird.

Die Aufgabe wird durch die kennzeichnenden Merkmale des Anspruchs 1 in Verbindung mit seinen Oberbegriffsmerkmalen gelöst.

Die Unteransprüche bilden vorteilhafte Weiterbildungen der Erfindung.

In bekannter Weise umfasst der Einpressbolzen ein Kopfteil mit einer dem Blechteil zugewandten Ringfläche. Diese Ringfläche liegt nach Einpressen des Einpressbolzens am Blechteil an, wobei ein am Kopfteil angeformter Schaft durch das Vorloch des Blechteils geführt ist. Ferner sind wenigstens zwei Einpressstrukturen an der Ringfläche angeformt, welche durch den Einpressvorgang in das Blechteil eingedrückt werden. Solche Einpressbolzen können einen gewindetragenden Abschnitt am Schaft aufweisen oder mit einer ähnlichen als Hinterschnitt wirkenden Struktur am Kopfende versehen sein. Weiter bekannt ist, dass die an der Ringfläche angeformten Einpressstrukturen radial beabstandet vom Schaft beginnen und über einen Scheitel oder Sattel radial beabstandet zum Ende der Ringfläche auslaufen. Dadurch wird ein direkter Kontakt des äußeren Bereichs der Ringfläche mit dem zu verbindenden Blechteil ermöglicht, wodurch der Halt des Einpressbolzens unter dynamischer Belastung wesentlich verbessert wird.

Erfindungsgemäß weisen die Einpressstrukturen einen Konturverlauf auf, bei welchem die Einpressstrukturen von ihrem radial inneren Ende zu ihrem Scheitel eine geringere Steigung aufweisen als von ihrem radial äußeren Ende zu ihrem Scheitel. Die erste Steigung schließt dabei einen ersten Winkel mit der Ringfläche ein, der kleiner ist als der Winkel den die Neigung mit der Ringfläche einschließt.

Durch die flachere Gestaltung der ersten Steigung wird ein gerichteter Materialfluss erzeugt, der von den Einpressstrukturen in Richtung Schaft/Gewinde fließt. Dort verdichtet sich das Material am Schaft und sorgt insbesondere bei Vorliegen eines Gewindeauslaufs oder einer ähnlichen einen Hinterschnitt bildenden Struktur für eine erheblich verbesserte Auszugsfestigkeit des Einpressbolzens. Das durch die Steigung zum Schaft verdrängte und verdichtete Material fließt in den Gewindeauslauf oder einen anzubringenden Hinterschnitt im Schaft und sorgt für eine verbesserte Auszugsfestigkeit des Einpressbolzens.

Gemäß einer vorteilhaften Ausgestaltung der Erfindung können in Umfangsrichtung eine Vielzahl von Erhebungen in der Art einzelner Einpressstrukturen vorgesehen sein. Vorzugsweise sind diese Einpressstrukturen gleichmäßig im selben radialen Abstand verteilt. Zwischen den einzelnen Einpressstrukturen ergibt sich dadurch ein Abstand. Dieser Abstand zwischen den Einpressstrukturen sorgt für eine Verdrehsicherheit des Einpressbolzens nach dem Einpressen.

Ein vorteilhafter Mindestabstand zwischen zwei benachbarten Einpressstrukturen beträgt wenigstens 5°, wodurch neben der Gewährleistung der Verdrehsicherheit ein Durchstanzen des Blechs verhindert werden kann.

Eine segmentartige Begrenzung der Einpressstrukturen in Umfangsrichtung erweist sich dabei als vorteilhaft. Die Segmentgröße kann vorzugsweise so gewählt sein, dass die Summe der radial innenliegenden Breiten der Einpressstrukturen dem Außenumfang des Schaftes entspricht. Dadurch wird die Gleichmäßigkeit des Materialflusses gesichert.

Das Verhältnis von Einpressstrukturbreite zu Einpressstrukturabstand beträgt insbesondere zwischen 1:1 und 8:1, beispielweise ein Winkelverhältnis von 40° Einpressstrukturbreite zu 5° Einpressstrukturabstand.

Vorzugsweise schließt die radial außenliegende Flanke der Einpressstruktur einen Winkel kleiner 90°, insbesondere einen Winkel zwischen 45° und 70°, mit der Ringfläche ein. Dies führt zu einer Reduzierung der notwendigen Einpresskraft, was wiederum negative Veränderungen des Blechmaterials minimiert.

Besonders vorteilhaft erweist sich eine Konturlinie der Einpressstrukturen in radialer Richtung, die beabstandet vom Schaft in einer ersten Flanke ansteigt und dann in eine zweite Flanke übergeht, die eine geringere Steigung aufweist als die erste Flanke und dann in einer Neigung wieder abfällt, die steiler als die Steigung der ersten Flanke ist. Durch einen abgeflachten Scheitel zu einem Sattel kann die Herstellung erheblich günstiger realisiert werden. Vorzugsweise kann die radial innenliegende erste Flanke einen Winkel gegenüber der Ringfläche von etwa 25° bis 30° aufweisen. Insbesondere bei einem Winkel von 28°wird ein ideales Fließverhalten des Materials in Richtung des Schaftes erzeugt.

In der radialen Ausdehnung erstrecken sich die Einpressstrukturen über bis zu 75%, insbesondere zwischen 50% und 75% der radialen Ausdehnung der Ringfläche. In diesem Bereich können Anpassungen aufgrund der zu erzielenden Auszugsfestigkeit vorgenommen werden.

Insbesondere kann ein Flächenverhältnis von Nockenfläche zu Ringfläche von 1:1 erreicht werden.

Insbesondere kann sich eine Strukturhöhe von etwa 50% der Blechdicke ergeben, wobei die Blechdicke in der Regel zwischen 0,5 mm und 4 mm variiert.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1: eine Draufsicht auf einen Einpressbolzen;
- Fig. 2: eine Seitenansicht des Einpressbolzens;
- Fig. 3: eine Teilschnittansicht eines vergrößerten Ausschnitts aus Fig. 2, und
- Fig. 4: eine perspektivische Ansicht einer Einpressschraube.

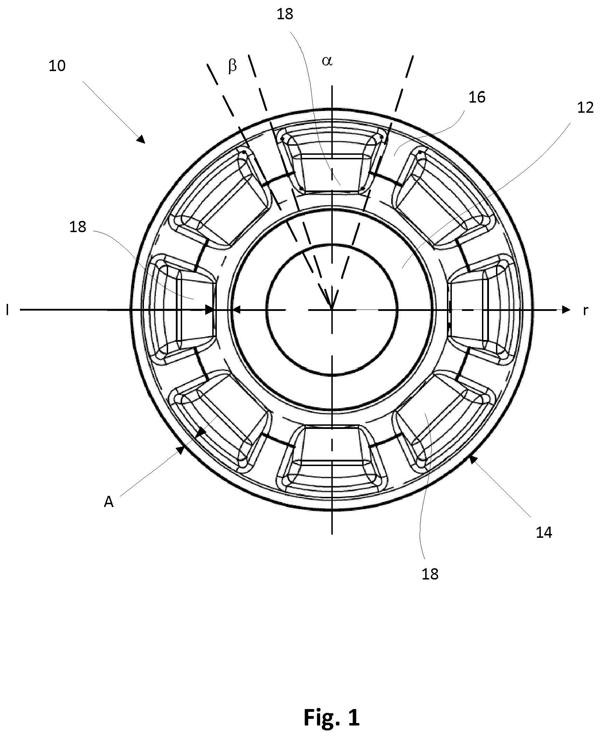

Fig. 1 zeigt eine Draufsicht auf einen Einpressbolzen 10, der in ein vorgelochtes Blechteil eingepresst ist. Der Einpressbolzen 10, der einen Schaft 12 und ein Kopfteil 14 aufweist, wird mit seiner einem Blechteil zugewandten Ringfläche 16 in eben dieses Blechteil eingepresst. Die Ringfläche 16 ist mit erhabenen Einpressstrukturen 18 versehen. Diese sind in Form von Segmentteilen gleichmäßig umlaufend an die Ringfläche 16 angeformt. Die Einpressstrukturen 18 weisen eine Breite von einem Winkel α auf, der im vorliegenden Ausführungsbeispiel etwa 40° entspricht, und sind in einem Abstand im Winkel β, der im Ausführungsbeispiel einem Winkel von etwa 5° entspricht, gleichmäßig umlaufend angeordnet. In einer radialen Ausdehnung r sind die Einpressstrukturen 18 vom Schaft 12 beabstandet und nehmen eine Ausdehnung von etwa 70% der Ringfläche 16 in radialer Richtung ein. Wie Fig. 1 zeigt, sind die Einpressstrukturen 18, welche in ein Blechteil eingepresst werden, in einem Abstand A von dem Außenrand der Ringfläche 16 beabstandet und in einem Abstand I vom Schaft 12. Der Abstand ist so gewählt, dass das von den Einpressstrukturen 18 verdrängte Volumen zwischen Schaft 12 und Einpressstrukturen 18 aufgenommen werden kann.

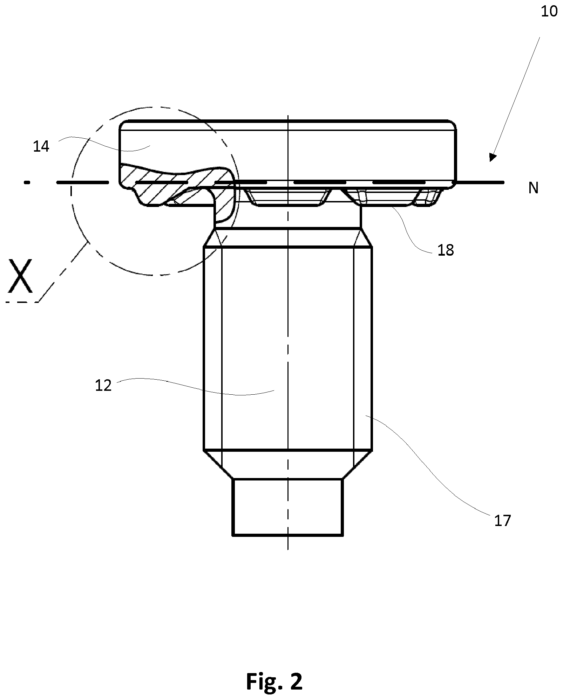

Fig. 2 zeigt den Einpressbolzen 10 in einer Seitenansicht. Das Kopfteil 14, welches eine plane Ringfläche 16 auf dem Niveau N aufweist, ist mit erhabenen Einpressstrukturen 18 versehen. Wie in der Fig. 2 dargestellt, weist der Schaft 12 des Einpressbolzens 10 ein Gewinde 17 auf, beispielsweise M6.

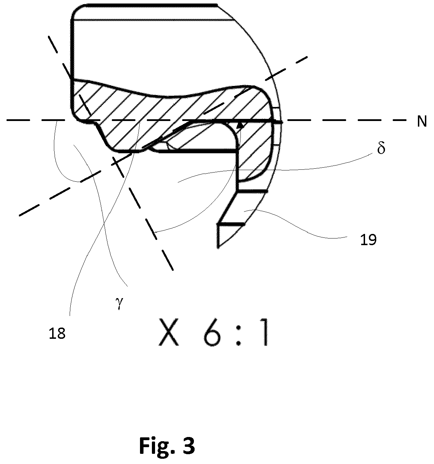

Fig. 3 zeigt einen vergrößerten Ausschnitt des in Fig. 2 mit X gekennzeichneten Teils. Fig. 3 zeigt eine Teilschnittansicht, in der eine Einpressstruktur 18 im Schnitt dargestellt ist. Dort ist zu sehen, dass die Flanke des radial innenliegenden Bereiches einen Steigungswinkel γ mit dem Ringflächenniveau N einschließt. Der Steigungswinkel γ ist vorzugsweise 28°, da dieser Winkel zu einem idealen Fließverhalten des verdrängten Materials während dem Einpressvorgang führt. Die Neigung δ, welche die radial äußere Flanke mit dem Niveau der Ringfläche 16 einschließt, liegt bei etwa 50°. Aufgrund des steileren Außenflankenwinkels erfolgt ein gerichteter Materialfluss während des Umformvorganges hin zu dem radial innenliegenden Bereich. Das Material fließt bis zum Gewindegangauslauf 19, wobei im Innenbereich zwischen Innenflanke und Schaft 12 eine Verfestigung durch das verdrängte Material mit dem Einpressbolzen 10 erfolgt. Dadurch wird eine maximale Auszugfestigkeit des Bolzens gegenüber dem Bauteil gewährleistet.

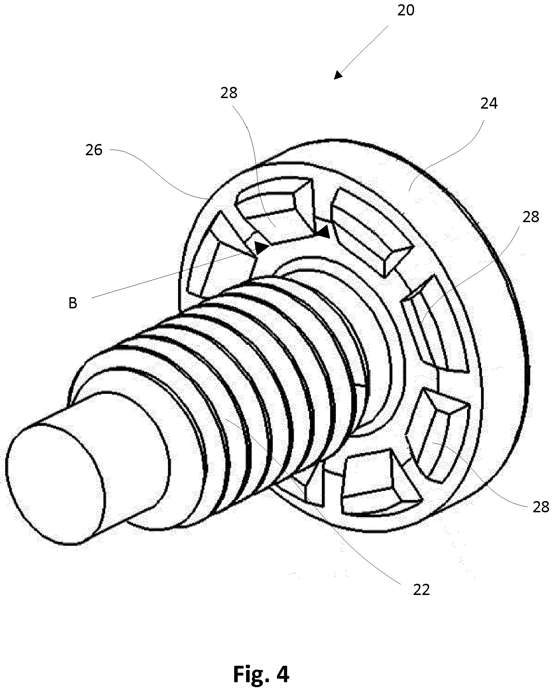

Fig. 4 zeigt eine perspektivische Ansicht einer erfindungsgemäßen Einpressschraube 20. Diese umfasst einen gewindetragenden Schaft 22 und ein Kopfteil 24. Zudem weist das Kopfteil 24 eine einem Blechteil zugewandte Ringfläche 26 auf. An dieser Ringfläche 26 sind acht Einpressstrukturen 28 gleichmäßig im gleichen radialen Abstand umlaufend verteilt. Die Einpressstrukturen 28 haben einen trapezförmigen Querschnitt, wobei der innenliegende Schenkel einen kleineren Winkel als der außenliegende Schenkel aufweist. Die radial innenliegende Begrenzung der Einpressstruktur 28 ist durch eine Sekante des Kreissegmentes definiert. Die Summe der Breiten B der Einpressstrukturen 28 entspricht dem Außendurchmesser d_{A} des gewindetragenden Schafts 22. Der gewindetragende Schaft 22 läuft an seinem dem Kopfteil 24 zugewandten Ende konusförmig aus, wodurch ein Hinterschnitt gebildet wird, der durch das von den Einpressstrukturen während des Einpressvorgangs verdrängte Material gleichmäßig ausgefüllt wird.

Durch die in der Figurenbeschreibung dargestellte Einpressstrukturgeometrie kann eine gegenüber dem Stand der Technik deutlich verbesserte Auszugsfestigkeit gewährleistet werden.

## Patentansprüche

1. Einpressbolzen (10, 20) zum Einpressen in ein vorgelochtes Blechteil, mit einem Kopfteil (14, 24) und einem Schaftteil (12, 22), wobei das Kopfteil (14, 24) eine dem Blechteil zugewandte Ringfläche (16, 26) aufweist, wobei ferner das Kopfteil (14, 24) an seiner dem Blechteil zugewandten Ringfläche (16, 26) wenigstens zwei erhabene Einpressstrukturen (18, 28) aufweist, wobei die Einpressstrukturen (18, 28) vom Schaft (12, 22) und vom radial äußeren Rand der Ringfläche (16, 26) beabstandet sind, **dadurch gekennzeichnet, dass** die Einpressstrukturen (18, 28) eine Konturlinie aufweisen, die ausgehend von der Ringfläche (16, 26) radial beabstandet zum Schaft (12, 22) mit einer ersten Steigung (γ) ansteigt und im weiteren Verlauf in einer Neigung (δ) wieder zur Ringfläche (16, 26) abfällt, wobei die erste Steigung (γ) geringer als die Neigung (δ) ist.

2. Einpressbolzen (10, 20) nach Anspruch 1, **dadurch gekennzeichnet, dass** zwischen der ersten Steigung (γ) und der Neigung (δ) eine zweite Steigung vorgesehen ist, die geringer als die erste Steigung ist.

3. Einpressbolzen (10, 20) nach einem der vorangehenden Ansprüche, **dadurch gekennzeichnet, dass** die Einpressstrukturen (18, 28) in Umfangsrichtung segmentartig begrenzt sind.

4. Einpressbolzen (10, 20) nach einem der vorangehenden Ansprüche, **dadurch gekennzeichnet, dass** die Einpressstrukturen (18, 28) gleichmäßig umfänglich an der Ringfläche (16, 26) verteilt sind.

5. Einpressbolzen (10, 20) nach einem der Ansprüche 3 bis 4, **dadurch gekennzeichnet, dass** der Abstand zweier benachbarter Einpressstrukturen (18, 28) einem Winkel von mehr als 5° entspricht.

6. Einpressbolzen (10, 20) nach einem der Ansprüche 3 bis 4, **dadurch gekennzeichnet, dass** der Abstand zweier benachbarter Einpressstrukturen (18, 28) einem Winkel von 5° entspricht und die Einpressstrukturen (18, 28) durch ein Winkelsegment von 40° begrenzt werden.

7. Einpressbolzen nach einem der vorangehenden Ansprüche, **dadurch gekennzeichnet, dass** sich die Einpressstruktur in radialer Erstreckung über 50% - 75 % der radialen Erstreckung der Ringfläche erstreckt.

8. Einpressbolzen nach einem der vorangehenden Ansprüche, **dadurch gekennzeichnet, dass** die erste Steigung einen Winkel (γ) in einem Bereich von 25° bis 30 ° aufweist.

9. Einpressbolzen nach einem der vorangehenden Ansprüche, **dadurch gekennzeichnet, dass** die Neigung einen Winkel (δ) in einem Bereich von 45% - 70 % aufweist.

10. Einpressbolzen (10, 20) nach einem der vorangehenden Ansprüche, **dadurch gekennzeichnet, dass** die Summe der Breiten (B) der Einpressstrukturen (18, 28) entspricht dem Außenumfang des Schafts

## Claims

1. Press-fit bolt (10,20) for press-fitting into a pre-punched sheet metal part, said bolt comprising a head portion (14, 24) and a shank portion (12, 22), which head portion (14, 24) includes an annular surface (16, 26) facing the sheet metal part, which annular surface (16, 26) of said head portion (14, 24) furthermore includes two pressed-in raised structures (18, 28), said pressed-in structures (18, 28) being spaced from said shank (12, 22) and from the radial outer edge of said annular surface (16, 26) **characterized in that** said pressed-in structures (18, 28) define a contour line which - starting from the annular surface (16, 26) and at a radial distance from said shank (12, 22) - rises with a first upward gradient (γ) and then - in its further extension - slopes down again toward said annular surface (16, 26) with a downward inclination (δ), with said first gradient (γ) being smaller than said downward inclination (δ).

2. Press-fit bolt (10,20) as claimed in claim 1 **characterized in that** a second gradient is provided between the first gradient (γ) and the downward inclination (δ), which second gradient is smaller than said first gradient.

3. Press-fit bolt (10, 20) as claimed in one of the preceding claims **characterized in that** said pressed-in structures (18, 28) are delimited in the circumferential direction so as to define segment-like structures.

4. Press-fit bolt (10, 20) as claimed in one of the preceding claims **characterized in that** said pressed-in structures (18, 28) are evenly distributed around the circumference of said annular surface (16, 26) .

5. Press-fit bolt (10, 20) as claimed in one of claims 3 to 4 **characterized in that** the distance between two adjacent pressed-in structures (18, 28) corresponds to an angle of more than 5°.

6. Press-fit bolt (10,20) as claimed in one of claims 3 to 4 **characterized in that** the distance between two adjacent pressed-in structures (18, 28) corresponds to an angle of 5° and that the pressed-in structures (18, 28) are delimited from each other by an angular segment of 40°.

7. Press-fit bolt (10,20) as claimed in one of the preceding claims **characterized in that** in its radial extension, the pressed-in structure covers between 50% and 70% of the radial extension of the annular surface.

8. Press-fit bolt (10, 20) as claimed in one of the preceding claims **characterized in that** the first gradient extends at an angle (γ) of between 25° and 30°.

9. Press-fit bolt (10, 20) as claimed in one of the preceding claims **characterized in that** the downward inclination extends at angle (δ) of between 45% and 70%.

10. Press-fit bolt (10,20) as claimed in one of the preceding claims **characterized in that** the sum of the widths (B) of the pressed-in structures (18, 28) corresponds to the outer circumference of the shank.

## Revendications

1. Boulon à sertir pour sertir (10, 20) dans une pièce de tôle perforée, avec une tête (14, 24) et une tige (12, 22), la tête (14, 24) disposant d'une surface annulaire (16, 26) orientée vers la pièce de tôle, la tête (14, 24) disposant également d'au moins deux structures à sertir en relief (18, 28) sur sa surface annulaire (16, 26) orientée vers la pièce de tôle, les structures à sertir (18, 28) se trouvant à une certaine distance de la tige (12, 22) et du bord radial extérieur de la surface annulaire (16, 26),
**caractérisé en ce que** les structures à sertir (18, 28) présentent une ligne de contour qui monte, à partir de la surface annulaire (16, 26), en rayons à une certaine distance de la tige (12, 22) via une première pente (γ) et qui descend dans la suite via une inclinaison (δ) en direction de la surface annulaire (16, 26), la première pente (γ) étant moins importante que l'inclinaison (δ).

2. Boulon à sertir (10,20) selon la revendication 1, **caractérisé en ce qu**'une deuxième pente étant moins importante que la première pente est prévue entre la première pente (γ) et l'inclinaison (δ).

3. Boulon à sertir (10,20) selon l'une quelconque des revendications précédentes, **caractérisé en ce que** les structures à sertir (18, 28) sont limitées dans la direction circonférentielle sous forme de segments.

4. Boulon à sertir (10,20) selon l'une quelconque des revendications précédentes, **caractérisé en ce que** les structures à sertir (18, 28) sont reparties uniformément sur la circonférence de la surface annulaire (16, 26).

5. Boulon à sertir (10,20) selon l'une des revendications 3 à 4, **caractérisé en ce que** la distance entre deux structures à sertir voisines (18, 28) corresponde à un angle supérieur à 5°.

6. Boulon à sertir (10, 20) selon l'une des revendications 3 à 4, **caractérisé en ce que** la distance entre deux structures à sertir voisines (18, 28) corresponde à un angle de 5° et que les structures à sertir (18, 28) sont limitées par un segment angulaire de 40°.

7. Boulon à sertir selon l'une quelconque des revendications précédentes, **caractérisé en ce que** la structure à sertir s'étend, au niveau de l'extension radiale, à 50% - 75% de l'extension radiale de la surface annulaire.

8. Boulon à sertir selon l'une quelconque des revendications précédentes, **caractérisé en ce que** la première pente présente un angle (γ) dans une plage de 25° à 30°.

9. Boulon à sertir selon l'une quelconque des revendications précédentes, **caractérisé en ce que** la première inclinaison présente un angle (δ) dans une plage de 45° - 70°.

10. Boulon à sertir (10, 20) selon l'une quelconque des revendications précédentes, **caractérisé en ce que** la somme des largeurs (B) des structures à sertir (18, 28) correspond à la circonférence extérieure de la tige.
